# EUROPEAN PATENT APPLICATION

(11) **EP 1 322 128 A1**
(43) Date of publication of application: **25.06.2003**
(21) Application number: 01958471.3
(22) Date of filing: 24.08.2001
(51) Int. Cl.: H04Q 7/36

(54) **RADIO RECEIVING SYSTEM AND METHOD**

(30) Priority: 04.09.2000 JP 2000267199
(71) Applicant: Sanyo Electric Co., Ltd., Moriguchi City, Osaka 570-8677 (JP)
(72) Inventor: NAGAI, Makoto c/o SANYO ELECTRIC CO., LTD., Moriguchi City, Osaka 570-8677 (JP); KITAKADO, Jun c/o SANYO ELECTRIC CO., LTD., Moriguchi City, Osaka 570-8677 (JP); KOIKE, Hirotaka c/o SANYO ELECTRIC CO., LTD., Moriguchi City, Osaka 570-8677 (JP); IWAMI, Masashi c/o SANYO ELECTRIC CO., LTD., Moriguchi City, Osaka 570-8677 (JP)
(74) Representative: Cross, Rupert Edward Blount
(86) International application number: JP0107263
(87) International publication number: WO02021869

(57) **Abstract**

A radio receiving system has a plurality of interference cancelers. Received signals are separated and demodulated by an adaptive array (AA), a parameter estimating section (PE), and a detector (DE) of each of the interference cancelers into the signals of the respective users and outputted from a processing circuit (200) lastly. A demodulated signal demodulated without any demodulation error is removed from the received signals, the interference due to the user signal is removed, and the resultant received signals are sent to the next interference canceler. Users are assigned to the same time slot in such a way that the difference between the reception powers of the user signals are as large as possible. Thus at least one of the user signals is demodulated without any error by each interference canceler and removed from the received signals. Therefore, the signal of each user can be extracted reliably by this radio receiving system of the PDMA method.

## Description

### TECHNICAL FIELD

The present invention relates to a radio receiving system and method, particularly to a technology of removing interference signals of other users in receiving radios by a communication method, such as a PDMA (Path Division Multiple Access) and the like.

### BACKGROUND ART

Heretofore, a technology of assigning and multiplexing a plurality of channels in the same frequency has been known.

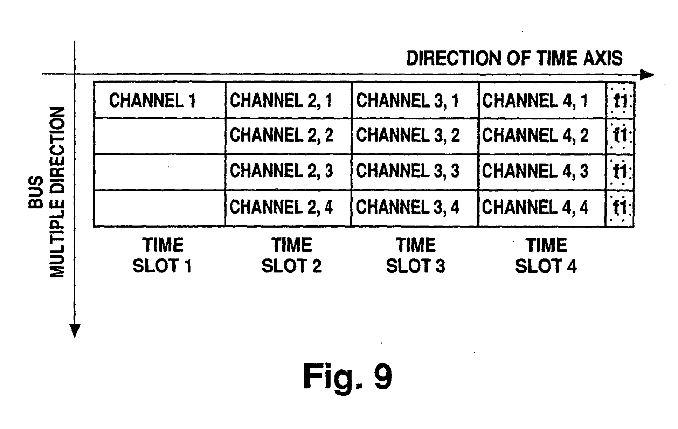

Fig. 9 shows a state of assigning channels by the PDMA method which is applied to portable telephones and the like. In the PDMA method, a spatial division of a single time slot in the same frequency is made and data is transmitted for a plurality of users. In the drawing, an axis of abscissa represents a time axis and an axis of ordinate represents a spatial direction (a bus multiple direction). Division of four slots (time slots 1 to 4) in the same frequency is made in a direction of the time axis, and each of the four slots is further divided into four busses which are different in spatial directions. Referring to a time slot 3 for example, the time slot 3 is divided into four channels, namely, a channel 3.1 (a first bus in the time slot 3), a channel 3.2 (a second bus in the time slot 3), a channel 3.3 (a third bus in the time slot 3), and a channel 3.4 (a fourth bus in the time slot 3). Different users are assigned to the channels, respectively. The four channels in the same time slot are separated using a signal extracting device, such as, an adaptive array and the like which has directivity. A fundamental principle of an adaptive array is that radio waves from different directions are received by a plurality of antennas and signals received from each of the antennas are weighted to differentiate signals from different users.

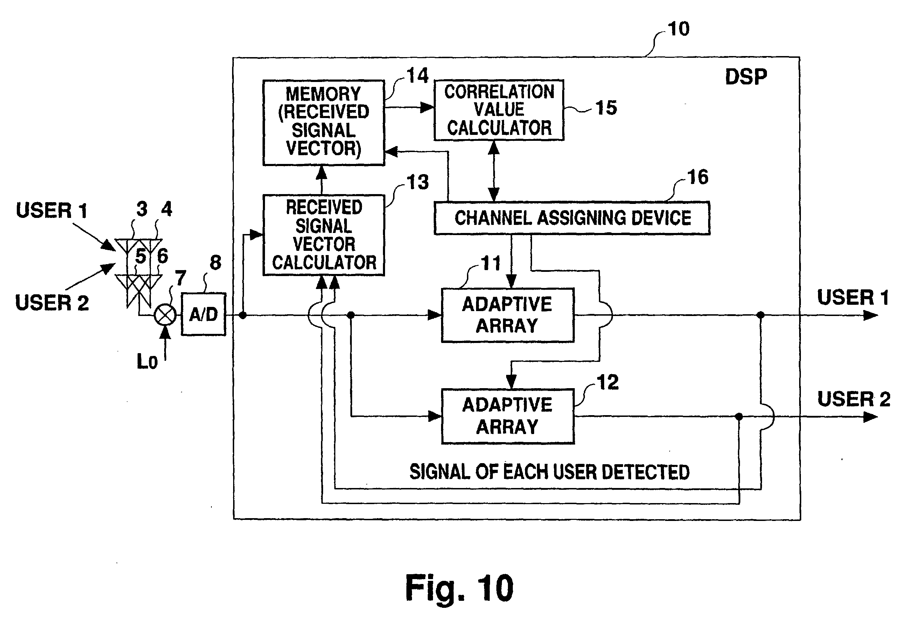

Fig. 10 shows the constitution of a conventional receiving system for PDMA. In the drawing, four antennas 3 to 6 are provided so as to separate a user 1 and a user 2, and a frequency conversion is applied to an output of each antenna by a local oscillation signal Lo in a frequency conversion circuit 7. Each received signal which has been subjected to frequency conversion is further converted into a digital signal by an A/D converter 8 and sent to a DSP (digital signal processor) 10.

Adaptive arrays 11 and 12, a received signal vector calculator 13, a memory 14, a correlation value calculator 15, and a channel assigning device 16 are built in the DSP 10. The adaptive arrays 11 and 12 extract only specified user signals, which are designated by the channel assigning device 16, out of received digital signals, respectively. More specifically, the adaptive array 11 extracts a received signal of the user 1 and the adaptive array 12 extracts a received signal of the user 2. The received signal vector calculator 13 calculates received signal vectors applicable to all the users based on the received digital signals and output signals of the adaptive arrays 11 and 12, and the received signal vector calculator 13 stores the received signal vectors in the memory 14. The channel assigning device 16 designates the two users (the user 1 and the user 2) for the memory 14 and the correlation value calculator 15. The correlation value calculator 15 calculates a mutual correlation value of the received signal vectors of the two designated users among from the received signal vectors stored in the memory 14. The channel assigning device 16 receives the calculated mutual correlation value of the received signal vectors of the two users, and then, if the mutual correlation value is a fixed value or less, the channel assigning device 16 assigns the two users to the same time slot for multiplexing.

As described above, although the same time slot can be assigned to a plurality of users, the assignment is only performed when a difference in strength of receiving power of signals received from a plurality of users is less than a certain fixed value because, it will be difficult to demodulate both of the signals under the fixed gain condition when there is a big difference in the power of the two received signals.

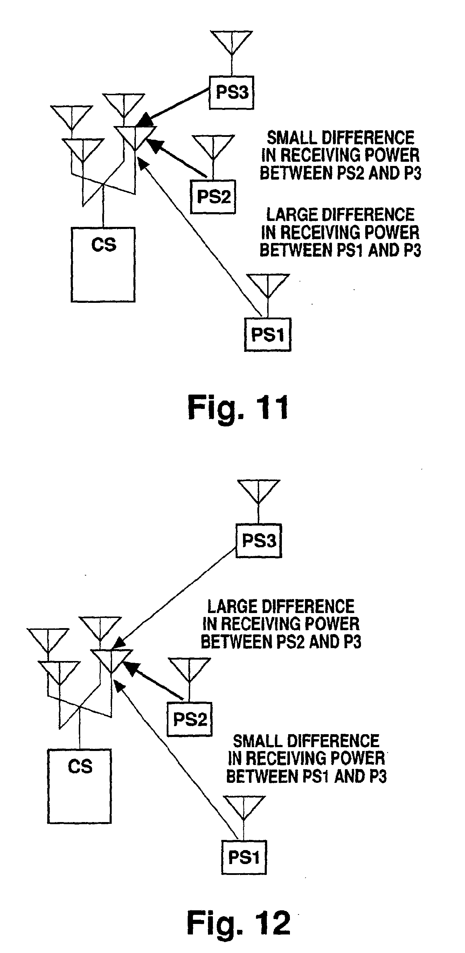

Figs. 11 and 12 show typical conventional assignment of time slots. In the illustrated example, communication is taking place between a base station CS and user terminals PS1 and PS2 (assuming the communication is taking place in different time slots), and an additional user terminal PS3 initiates a new call. As shown in Fig. 11, the difference between receiving power of PS1 and PS2 and receiving power of PS3 is calculated. If the difference in receiving power between PS1 and PS3 is greater than the difference in receiving power between PS2 and PS3, the base station CS assigns the new user terminal PS3 to the time slot of PS2 because the difference in receiving power is smaller, and carries out multiplexing of both PS2 and PS3 in that time slot. On the other hand, as shown in Fig. 12, if the difference in receiving power between PS1 and PS3 is smaller than the difference in receiving power between PS2 and PS3, the base station CS assigns the new user terminal PS3 to the time slot of PS1, and carries out multiplexing of both PS1 and PS3 in that time slot.

As described above, heretofore a plurality of users whose mutual correlation values or differences of receiving power strength are a fixed value or less have been assigned to the same time slot and a received signal of each user has been separated and extracted by an adaptive array. However, as shown in Fig.11, for example, when PS2 and PS3 are assigned to the same time slot and PS2 and PS3 transmit signals from almost identical directions, the adaptive array cannot separate the signals, and separation of just PS2 or PS3 is impossible. This is a problem.

In response, the present applicant developed the radio receiving system described in Japanese Patent Application No. Hei 11-290093. In that system, a plurality of interference cancellers each of which comprises an adaptive array, a parameter estimating device for estimating how much signal components of a user are contained in a signal, and an arithmetic unit which removes interference signal components by extracting from input signals signal components of all the users other than a certain user, are connected in series and at a plurality of stages. The ratio of signal components of other users contained in user signals to the user signals is decreased step by step at each stage, and finally the user signals are completely separated and extracted from user to user.

In such a configuration in which interference cancellers are connected in series and at a plurality of stages (hereinafter called as a MIC, a multiple stage interference canceller), a signal of any one of the users can normally be demodulated at a certain stage, and the signal of the user normally demodulated is removed from received signals and outputted to a canceller of the next stage. Thus, it is necessary to demodulate at least one of the user signals without any error at each stage.

However, if users transmitting singles of similar strength are assigned to the same time slot, as commonly occurs with MIC, it will be possible to normally demodulate all the user signals at a certain stage. On the other hand, it will be possible to fail in demodulation of all the user signals. Thus, the full functionality of MIC cannot always be realized. In other words, if the constitution is such that a single stage is provided, it is necessary to simultaneously separate all users, and such assignment should be prioritized such that all user signals can be normally be demodulated. However, if the constitution is such that a plurality of stages are provided as in MIC, when a demodulation error occurs to all the user signals as a result of such assignment, interference cannot be sequentially canceled. Thus, there has been such a problem that it is difficult to separate signals from user to user.

### DISCLOSURE OF THE INVENTION

The present invention was made in consideration of the above problems and advantageously provides a device and method in which signals are received from a plurality of users using a plurality of antennas which is able to reliably separate signals from different users and communicate with the plurality of users.

The present invention is a radio receiving system which receives signals from a plurality of users using a plurality of antennas. The present invention is characterized in that it has channel assignment information generating means for generating channel assignment information as to user signals to be extracted and extraction means for extracting each user signal from signals received by the plurality of antennas, based on the channel assignment information, and the channel assignment information generating means generate the channel assignment information to be extracted so as to create a difference in receiving power between respective users and supply the channel assignment information to the extraction means. When a the receiving power of signals from respective users is different, at least any one of the user signals can securely be separated and extracted, even when it is not possible to separate and extract all the user signals. Therefore, it is possible to remove the user signal securely separated and extracted from a plurality of user signals received by the plurality of antennas.

Here, it may be preferable that the channel assignment information generating means generate the channel assignment information to be extracted and supply the channel assignment information to the extraction means to ensure that at least one of the differences in receiving power among the respective users exceeds the specified value. By creating a sufficiently wide difference in receiving power which exceeds the specified value, at least one of the user signals (the signal having the greatest receiving power) can securely be separated and extracted. The specified value may be a fixed value, for example 10dB, or may be a variable or adjustable value. It is also possible to determine the specified value according to an allowable error rate.

It may further be preferable that the extraction means are constituted in such a manner that a plurality of extraction units for extracting the user signals from user to user are connected in series, and the extraction unit extracts at least any one of the user signals, removes the extracted user signal from input signals received and supplies the extracted user signal to the extraction unit of the next stage. If a plurality of extraction units are connected in series to constitute the MIC, there will be a difference in receiving power between the respective users at each stage, at each extraction unit. Thus, any one of the signals (a signal having the greatest receiving power) can securely be separated and extracted, whereby it is possible to effectively demonstrate an interference removing function at each extraction unit.

In one aspect of the present invention, the channel assignment information generating means generate channel assignment information multiplexed by the PDMA method, and the extraction means can extract each user signal from the user signals multiplexed by the PDMA method.

Further, it may also be preferable that in this system, the channel assignment information generating means update the channel assignment information at intervals of a certain period of time. Thus, the most suitable channel assignment information can always be generated and stable communication with a plurality of users can be established and maintained.

Further, in this system, it is possible to provide means for controlling transmitting power at a user terminal in order to ensure a difference in receiving power between the respective channels. Thus, when there is at first no difference in receiving power, it is possible to generate a difference in receiving power, such that suitable channel assignment information can in turn be generated.

Further, the present invention provides a method of receiving signals from a plurality of users using a plurality of antennas. This method is characterized by including an assignment step of assigning a plurality of user signals to the same time slot in order for differences in receiving power among the users to arise and a separation step of separating the user signals, which are assigned to the same time slot, from the received signals.

It may be preferable that, at the assignment step, the plurality of users are assigned to the same time slot in order for at least any one of the differences in receiving power to exceed a specified value.

Further, it is preferable that at the assignment step, if there are a plurality of time slots which can be assigned, a plurality of user signals are assigned to the same time slot in order to enhance the differences in receiving power.

In this method, it is preferable that at the separation step, the user signals assigned to the same time slot are separated from the received signals and demodulated one at a time, and the user signals demodulated are removed from the received signals one at a time.

In this method, the assignment step can be repeated at a specified interval.

Further, in this method, it is also possible to have further a step of controlling transmitting power of a user terminal in order for the differences in receiving power to arise.

This method can be preferably applied to radio reception using PDMA.

### BRIEF DESCRIPTION OF THE DRAWINGS

Fig. 1 is a block diagram of a radio receiving system according to a preferred embodiment of the present invention.
Fig. 2 is a block diagram of a radio receiving system according to the embodiment.
Fig. 3 is a processing flowchart (No.1) according to the embodiment.
Fig. 14 is a processing flowchart (No. 2) according to the embodiment.

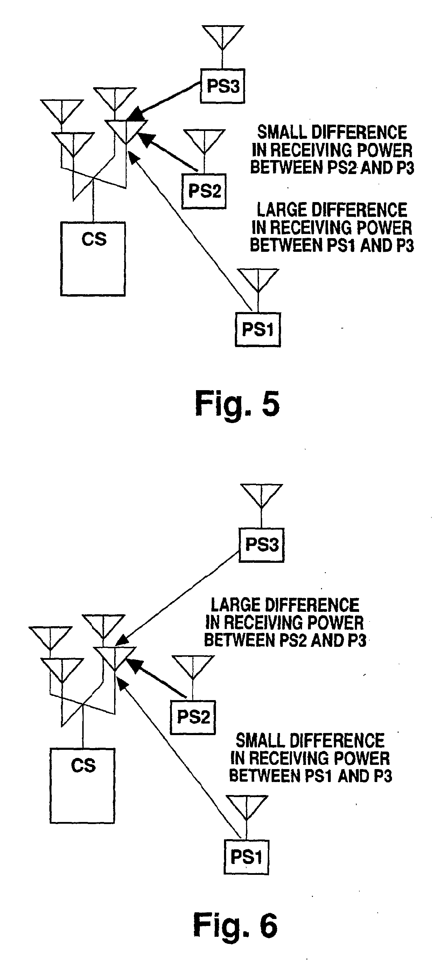

Fig. 5 is an explanatory drawing of new user assignment according to the embodiment.
Fig. 6 is an explanatory drawing of new user assignment according to the embodiment.

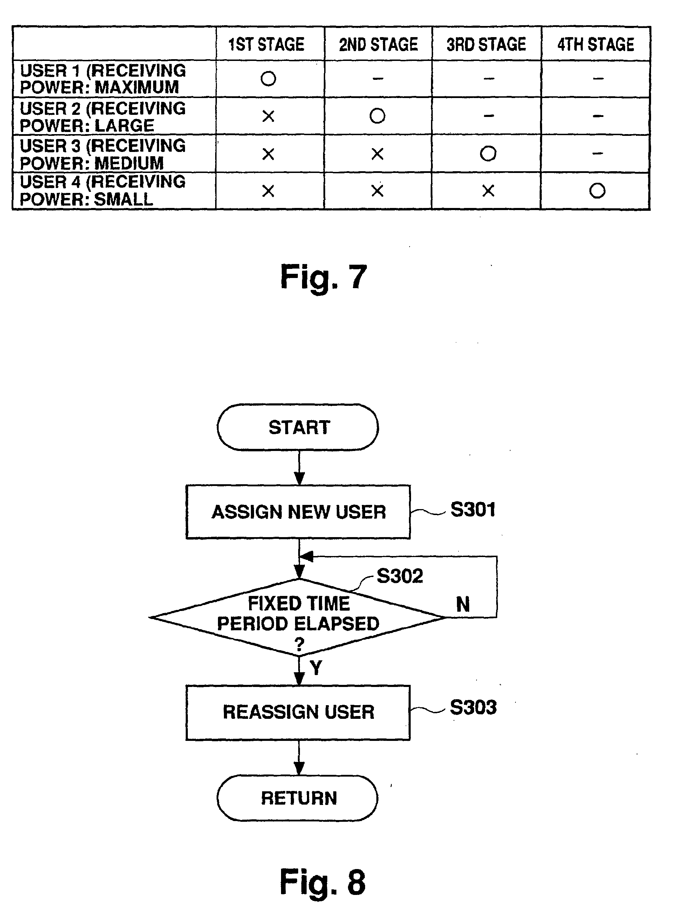

Fig. 7 is an explanatory drawing of processing results according to the embodiment.
Fig. 8 is a processing flowchart according to another embodiment.
Fig. 9 is an explanatory drawing of user (channel) assignment by a PDMA method.
Fig. 10 is a block diagram of a conventional radio receiving system.
Fig. 11 is an explanatory drawing of conventional new user assignment.
Fig. 12 is an explanatory drawing of conventional new user assignment.

### BEST MODE FOR CARRYING OUT THE INVENTION

In the following, a preferred embodiment of the present invention will be described with reference to the accompanying drawings.

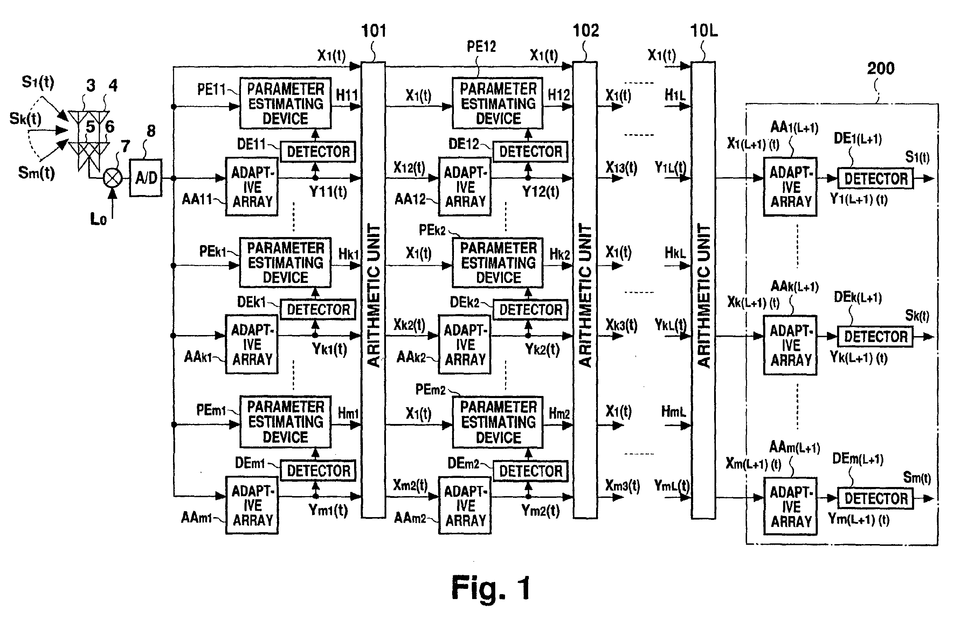

A receiving system using MIC will be described as an example of application of the present invention. Fig. 1 shows the constitution of a receiving system using MIC. Four antennas 3 - 6, a frequency converter 7, and an A/D converter 8 are provided, and an input signal vector X1(t) output from the A/D converter 8 is sent to an arithmetic unit 101 at the first stage, adaptive arrays AA11 - AAm1 at the first stage, and parameter estimating devices PE11 - PEm1 at the first stage.

User signals Y11 - Ym1 which are complex signals containing corresponding user signal components are output from the adaptive arrays AA11 - AAm1, respectively. The user signals Y11 - Ym1 are sent to the arithmetic unit at the first stage and are detected (demodulated) by corresponding detectors (demodulators) DE11 - DEm1.

Based on the input vector signal X1(t) and detected outputs (demodulated outputs), the parameter estimating devices PE11 - PEm1 estimate received signal coefficient vectors H11 - Hm1 and send the estimated values to the arithmetic device 101 at the first stage. The parameter estimating devices PE11 - PEm1 estimate how much the corresponding user signal components are contained in input signal vectors, how much the corresponding user signal components make phase rotations with respect to the input signal vectors.

The arithmetic device 101 at the first stage removes interference signal components for every user i (i=1 - m) by extracting all the user signal components excluding the user i from the input signal vector X1(t), and calculates and outputs an input signal vector Xi2(t) of the user i. However, if a demodulation error arises at the demodulators DE11 - DEm1, the signals will not be removed as the interference signal components from the input signal vectors. If interference components are removed using signals to which a demodulation error occurred, the demodulation error will directly influence on input signals of the next stage. The arithmetic device 101 calculates input signals X12(t) - Xm2(t) from user to user and send the input signals to adaptive arrays AA12 - AAm2 of the second stage.

Operations of the adaptive arrays, parameter estimating devices, detectors, arithmetic devices of the second stage are same as the operations of those of the first stage, and all the user signal components excluding the user i are removed at each of the stages.

Therefore, other user signal components are fully removed from input signals X1(L+1)(t) - Xm(L+1)(t) which have passed an arithmetic device 10L of the Lth stage, and it is possible to separate and output the input signals X1(L+1)(t) - Xm(L+1)(t) from user to user by a separation section 200 which is composed of the last adaptive array and detector.

With regard to user signals normally demodulated without any demodulation error, because cancellation of interference components is no longer necessary, the signals need not be sent to a canceller at the next stage. For example in Fig. 1, when signals of a user 1 are separated, it will be sufficient if the arithmetic device 101 does not output the input signal X12(t), but outputs input signals X22(t) - Xm2(t) to adaptive arrays of the next stage and removes the interference components from the input signals one after another.

As described above, when user signals differing only slightly in receiving power are assigned to the same time slot, when a demodulation error occurs to all the user signals in the canceller of the first stage, signals to be sent to the next stage cannot be generated and signals from different users cannot be separated.

Thus, in this embodiment, on the assumption that such an MIC constitution is employed, it is possible to securely separate a signal of each user by further adjusting the user assignment.

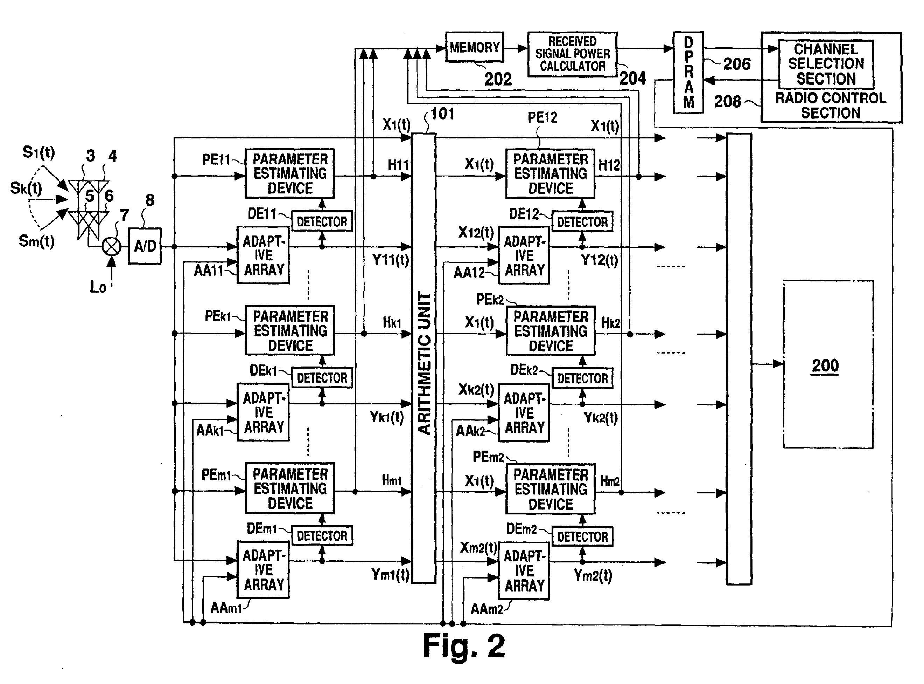

Fig. 2 shows the constitution of a radio receiving system according to this embodiment. Although the constitution is fundamentally similar to that of Fig. 1, the method of assigning a channel is different in the present embodiment. More specifically, in the present embodiment is provided a memory 202 for storing a received signal coefficient H of a user signal from a parameter estimating device PE at each stage, a received signal power calculator 204 for calculating receiving the power of each user signal based on the stored received signal coefficient, a DPRAM 206 which stores the calculated received signal power, and a channel selecting section 208 for determining the channel assignment based on the received signal power. Unlike conventional systems, user signals whose receiving powers are similar are not assigned to the same time slot. Rather, the system is configured such that user signals with relatively large differences in received power are assigned to the same time slot, and instructions are given to an adaptive array of each stage. The received signal power calculator 204 can calculate the receiving power of each user according to the formula P=H², based on each received signal coefficient H. Channel assignment information determined by the channel selection section 208 is supplied to an adaptive array of each stage and a user signal designated is extracted by the adaptive array of each stage.

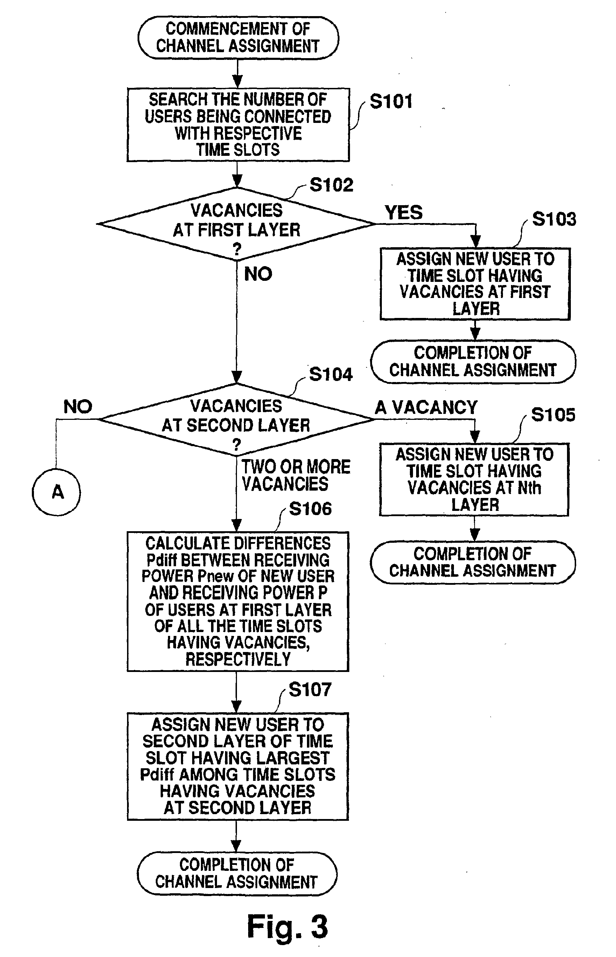

Fig. 3 shows an assignment processing flowchart at the channel selection section 208 which functions as channel assignment information generating means. First, the number of users connected to each time slot is confirmed (S101). In the case of the constitution shown in Fig. 9, the number of users presently assigned to each of four time slots is confirmed. While focusing on a first layer, namely, a first direction of the bus multiple direction, it is judged whether or not any vacant slots are available (S102). If there is a vacancy at the first layer, a time slot having a vacancy at the first layer will be assigned to a user newly initiating a call (S103). In other words, if possible, each of a plurality of users will be assigned a different time slot. If, however, the time slots at the first layer have already been occupied and therefore no vacant slots are available, it will next be judged whether or not there is a vacancy at the second layer (S104). If there is a single time slot having a vacancy, in accordance with an algorithm which assigns a plurality of users to different time slots as much as possible, a user initiating a new call will be assigned to a time slot having a vacancy (S105). If there are two or more time slots having a vacancy at the second layer, it will be determined in which of the two time slots having a vacancy assignment is preferable, based on the received power calculated by the received signal power calculator 204. More specifically, differences Pdiff between receiving power P of users who have already been assigned to the first layer of time slots which have a vacancy at the second layer and receiving power Pnew of a user initiating a new call are calculated (S106). For example, if a second time slot and a third time slot have vacancies at the second layer are and a user 2 and a user 3 have already been assigned to the first layer of each of the second and third time slots, a difference P2-Pnew between receiving power P2 of user 2 and the receiving power Pnew of the new user and a difference P3-Pnew between receiving power P3 of user 3 and the receiving power Pnew of the new user will be calculated. Among the time slots which have a vacancy at the second layer, the second layer of the time slot in which the Pdiff is largest, namely the time slot in which the difference in receiving power between the respective two users is largest, is selected and the new user is assigned to the time slot selected (S107). In the above example, becauseP2-Pnew is smaller than P3-Pnew, the new user will be assigned to the second layer of the third time slot to which user 3 has been assigned.

If the new user is assigned to a time slot in which the difference in receiving power is large and user signals are distinguished in the time slot, it will be easy to demodulate the signal having large receiving power. Therefore, at least one large received signal can be reliably demodulated at each MIC stage, and it will be possible to remove interference components from input signals using these user signals.

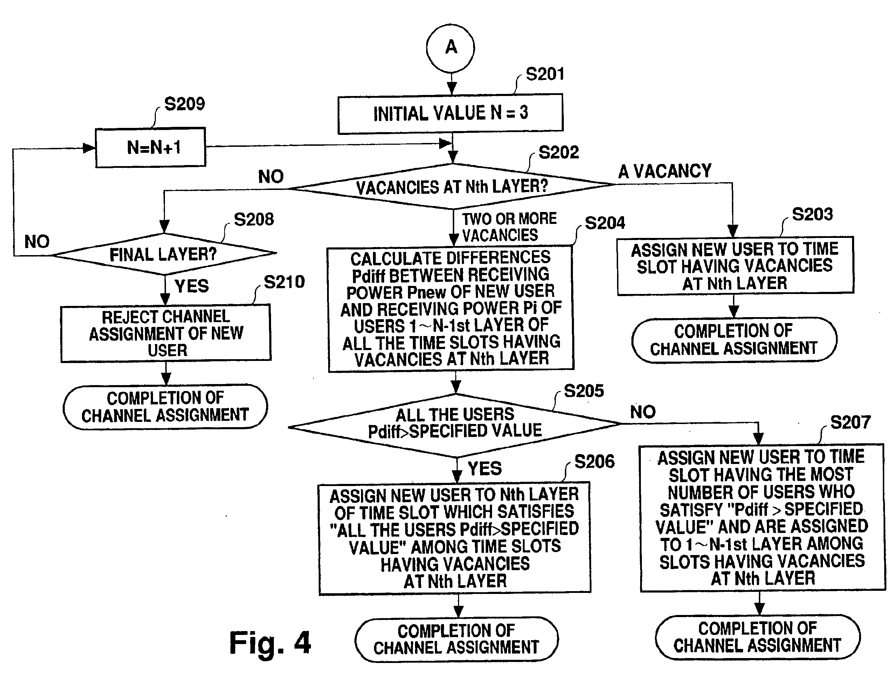

When, on the other hand, there is no vacancy at the second layer in all the time slots, the channel selection section 208 will assign slots according to the process of Fig. 4. More specifically, a parameter N which represents a layer is set to 3 (S201) and it is judged whether or not there is any time slot whose Nth layer (namely, the third layer) is vacant (S202). If there is a single time slot which has a vacancy at the third layer, similarly to the processes S104 and S105 at the second layer, the new user is assigned to the time slot concerned having a vacancy at the third layer according to the algorithm which assigns users to different time slots to the extent possible (S203).

On the other hand, if there are two or more time slots which have a vacancy at the third layer, the differences Pidiff between receiving power Pnew of the new user and receiving power Pi of users who are assigned to the first layer and the second layer of all the time slots having a vacancy at the third layer will be calculated (S204). For example, if there is a vacancy at the third layer of the second and third time slots, the users 1 and 2 are assigned to the first and second layers of the second time slot, respectively, the users 3 and 4 are assigned to the first and second layers of the third time slot, and P1-Pnew, P2-Pnew, P3-Pnew, and P4-Pnew are calculated. It is then judged whether or not all the Pidiffs exceed a specified value, in other words whether or not differences in receiving power are sufficiently large (S205). The specified value may be 10dB, for example. If a time slot in which the differences in receiving power among all the users assigned exceed the specified value is found, the new user is assigned to that time slot (S206). For example, if both of P1-Pnew and P2-Pnew exceed the specified value in the second time slot, the new user will be assigned to the second time slot. In this manner, it is assured that the receiving powers of user 1, user 2, and the new user will sufficiently differ from each other, whereby at each stage of the MIC, any one of the user signals (a signal having the largest receiving power) can be securely and reliably demodulated and extracted from the input signals, and signals to be sent to the next stage can be generated. Further, if there is no slot in which the differences in receiving power of all users exceeds the specified value, the time slot having the greatest number of users who exceed the specified value will be selected and the new user will be assigned to the time slot (S207). For example, if both of the P1-Pnew and P2-Pnew are less than the specified value in the second time slot, P3-Pnew is the specified value or less, and the P4-Pnew exceeds the specified value in the third time slot, the new user will be assigned to the third time slot. Thus, in the time slot to which the new user is assigned, at least the receiving power of any one of the users exceeds the specified value and is larger than the receiving power of the other users. Therefore, the user signal is demodulated and extracted from input signals, whereby it is possible to generate a signal to be sent to the next stage of the MIC. When the differences in receiving power among all the users are the specified value or less in all the time slots which have a vacancy at the third layer, the new user will be assigned to a random time slot which has a vacancy at the third layer.

On the other hand, if there are no time slots having a vacancy at the third layer, it will be judged whether or not the third layer is the final layer (S208). The number of layers which can be multiplexed is determined according to the number of antennas . For example, if a certain time slot can be multiplexed, up to four layers as shown in Fig. 9, N will be increased by one because the present layer is not the final layer (S209), and the processes including and subsequent to S202 will be repeated. Thus, the new user is assigned to the fourth layer of any one of the time slots. However, if it is determined that the present layer is the final layer, it is determined that the new user cannot be assigned, channel assignment is rejected (S210), and the process is completed. The channel assignment information generated by the processes described above is supplied to an adaptive array of each stage, as already described.

Figs. 5 and 6 typically show an assignment process according to this embodiment. When the new user terminal PS3 initiates a call as shown in Fig. 5 and PS1-PS3 is larger than PS2-PS3 in the difference of receiving power, not PS2, but PS1 and PS3 will be assigned to the same time slot. Further, if PS1-PS3 is smaller than PS2-PS3 in the difference of receiving power as shown in Fig. 6, PS3 will be assigned to the time slot of the PS2 and multiplexing will be applied to the same time slot. It is noted that a comparison with a conventional assignment process shown in Figs. 11 and 12 should be made.

It should be noted that, in the assignment process according to this embodiment, users are assigned to different time slots to the extent possible, and therefore multiplicity of each time slot is decreased. However, it is also possible to assign slots by prioritizing the size of differences in receiving power. More specifically, if there is a single time slot which has a vacancy at the second layer, the new user will not be assigned to the time slot and regardless of vacancy at the second layer, the new user can also be assigned to the third layer of the time slot in which the difference in receiving power is large. For example, even though users 1 and 2 are assigned to the second time slot, the users 3 and 4 are assigned to the third time slot, there are no vacancies at the first and second layers of the third time slot, and only a user 5 is assigned to the fourth time slot and there is a vacancy at the second layer of the fourth time slot, when a new user 6 calls, if the differences in receiving power between the new user 6 and the respective users 1 and 2 exceed the specified value and if the difference in receiving power between user 5 and the new user 6 is the specified value or less in the fourth time slot which has a vacancy at the second layer, the new user 6 will be assigned not to the fourth time slot, but to the second time slot.

The following is a summary of an algorithm of the assignment of new users.
(1) New users are assigned to different time slots in order to decrease multiplicity of the time slots as much as possible and, in the case that the Nth layers of all the time slots are assigned to existing users, the time slot to be assigned to the N+1 layer is determined based on the differences in receiving power. In other words, the new user is assigned to the N+1 layer of the time slot in which the difference in receiving power between the new user and the existing user can be sufficiently large.
(2) With respect to the first layer, new users are assigned to different time slots. However, with respect to the second and subsequent layers, new users are assigned to time slots which can accept a large difference in receiving power between an existing user and a new user regardless of multiplicity of each time slot.

Fig. 7 shows a state of demodulation at each stage of the MIC in such a case that new users are assigned according to the algorithm of this embodiment. It is assumed that users 1 - 4 are assigned to a certain time slot and receiving power is large in order of the users 1 - 4. In the drawing, a reference symbol ○ represents that demodulation is performed without any error, and a reference symbol × represents that a demodulation error arises. At the first stage of the MIC, a signal of user 1 whose receiving power is largest is normally demodulated and demodulation errors occur to signals of the other users 2 - 4. By extracting from input signals the signal of user 1 which is normally demodulated, the signal of user 1 which is contained in the input signals is removed and becomes signal input at the next stage of MIC.

At the second MIC stage, the signal of user 1 has already been removed and a signal of user 2 has the largest receiving power and is normally demodulated. The signal of user 2 normally demodulated is extracted from the input signals, and the input signals which do not contain the signal of the user 2 as an interference component are sent to the next stage.

At the third stage of MIC, signal components of users 1 and 2 have already been removed, and the signal user 3, which is now the strongest, is demodulated without any error. The signal of the user 3 is the extracted from the input signals and the input signals which contain components of only the signal of user 4 are sent to the next stage.

At the fourth stage of MIC, because, for practical purposes, only the signal of user 4 is present (other signal components may be present, but only to a negligible extent), it is possible to easily extract and demodulate the signal of user 4.

As described above, because in this embodiment assignment is made in a manner to ensure that the differences in receiving power between a new user and existing users will be large when multiplexing is applied to the same time slot, differences in receiving power among assigned users assigned appear as shown in Fig. 7. Thus, it is possible to securely demodulate at least one of the user signals at each stage of MIC.

Although a preferred embodiment of the present invention is described above, the present invention is not limited to the above configuration, and it is possible to make various modifications within the technical idea of the present invention. For example, because it is possible that after a new user is assigned to a time slot based on the algorithm (1) or (2) described above, the location and receiving power of a user terminal will change, it is also preferable to employ a dynamic change of assignment of a user to a time slot.

Fig. 8 is a flowchart of assignment processing in such a case. First, according to the algorithm (1) or (2), a new user is assigned to a time slot (S301). It is then judged whether or not a certain period of time has elapsed subsequent to assignment (S302). It the set amount of time has passed, differences in receiving power among all the users being in communication are recalculated, and, if necessary, the new user is reassigned to a time slot which will result in sufficiently large differences in receiving power (S303). As an example, assignment of first layer users is left unchanged, the differences in receiving power among users at the second layer and the subsequent layers is calculated, and the users at the first stage are reassigned to the second layer and subsequent layers so as to ensure sufficiently large differences in receiving power.

Further, in the preferred embodiment, it may also be preferable that, when a difference in receiving power between a new user and an existing user is a specified value or less and the difference in receiving power is relatively small, the new user will not be assigned to a random time slot, but the difference in receiving power will be enhanced by controlling the receiving power of the users itself. For this purpose, for example, a power control section is newly installed in the constitution of Fig. 2, and, if the difference between the new user and the existing user is less than or equal to the specified value, a power control signal will be transmitted from the power control section to a new user terminal, transmission power of the new user terminal will be increased or decreased, and the difference in receiving power between the new user and the existing user will be made larger. Thus, each stage of MIC can be made to function more effectively.

As described above, according to the present invention, a signal of each user is securely separated from received signals in which a plurality of user signals are contained, and thus communication with a plurality of users can be performed simultaneously.

## Claims

1. A radio receiving system which receives signals from a plurality of users using a plurality of antennas, the system comprising:
channel assignment information generating means for generating channel assignment information concerning a user signal to be extracted; and
extraction means for extracting a user signal of each user from received signals received by the plurality of antennas based on the channel assignment information,
wherein the channel assignment information generating means generate the channel assignment information to be extracted and supply the channel assignment information to the extraction means in such a manner as to ensure a difference in receiving power between user signals.

2. The radio receiving system according to claim 1, wherein the channel assignment information generating means generate channel assignment information to be extracted and supply the channel assignment information to the extraction means so that at least any one of the differences in receiving power among respective users exceeds a specified value.

3. The radio receiving system according to any one of claims 1 and 2, wherein the extraction means are constituted in such a manner that a plurality of extraction units for extracting a user signal of each user are connected in series, and the extraction unit extracts at least one of the user signals, removes the extracted user signal from input signals, and supplies the signals from which the extracted user signal has been removed to the extraction unit for a next stage.

4. The radio receiving system according to claim 3, wherein the channel assignment information generating means generate channel assignment information which is multiplexed by a PDMA method, and the extraction means extract a user signal of each user from user signals which are multiplexed by the PDMA method.

5. The radio receiving system according to any one of claims 1 through 4, the channel assignment information generating means periodically update the channel assignment information at a set interval.

6. The radio receiving system according to any one of claims 1 through 4 further comprising:
means for controlling transmitting power of a user terminal to create a difference in receiving power between a plurality of channels.

7. A method of receiving radio signals from a plurality of users using a plurality of antennas, the method comprising:
an assignment step of assigning a plurality of user signals to an identical time slot to create differences in receiving power; and
a separation step of separating the user signals assigned to the identical time slot from received signals.

8. The radio receiving method according to claim 7, wherein, at the assignment step, the plurality of users are assigned to an identical time slot so that at least one of the differences in receiving power exceeds a specified value.

9. The radio receiving method according to claim 7, wherein at the assignment step, when there exist a plurality of time slots which can be assigned, a plurality of user signals will be assigned to an identical time slot in such a manner that the differences in receiving power become larger.

10. The radio receiving method according to any one of claims 7 through 9, wherein at the separation step, user signals assigned to the identical time slot are individually and sequentially separated from the received signals and demodulated at a plurality of stages, and the user signals demodulated are removed from the received signals one at a time.

11. The radio receiving method according to any one of claims 7 through 10, wherein the assignment step is repeatedly performed at a specified interval.

12. The radio receiving method according to any one of claims 7 through 10 further comprising:
a step of controlling transmitting power of a user terminal in order to generate or enhance the differences in receiving power.

13. The radio receiving method according to any one of claims 7 through 12, wherein the assignment step and the extraction step are carried out by a PDMA method.
